**Europäisches Patentamt**

**European Patent Office**

**Office européen des brevets**

(19)

(11) Veröffentlichungsnummer: **0 383 352**
**A1**

# (12) EUROPÄISCHE PATENTANMELDUNG

(21) Anmeldenummer: **90103072.6**

(22) Anmeldetag: **16.02.90**

(51) Int. Cl.5: **G05D 1/02**

(30) Priorität: **16.02.89 CH 538/89**

(43) Veröffentlichungstag der Anmeldung:
**22.08.90 Patentblatt 90/34**

(84) Benannte Vertragsstaaten:
**CH DE ES FR GB IT LI**

(71) Anmelder: **MASCHINENFABRIK RIETER AG**
**Postfach 290**
**CH-8406 Winterthur(CH)**

(72) Erfinder: **Meyer, Urs**
**Hohfurristrasse 1**
**CH-8172 Niederglatt ZH(CH)**
Erfinder: **Oberhänsli, René**
**Wingertstrasse 19**
**CH-8542 Wiesendangen(CH)**
Erfinder: **Häusler, Dominik**
**Bühlstrasse 12**
**CH-6314 Unterägeri(CH)**

(54) **Leitsensor für automatisch gelenktes Fahrzeug.**

(57) Die Erfindung bezieht sich auf ein Verfahren zum Abgleichen einer optischen Sensorreihe, welche zum Führen eines selbstfahrenden Fahrzeuges entlang einer optischen Leitlinie (14) quer zur Fahrtrichtung am Fahrzeug befestigt ist. Bekannte Systeme versuchen durch Abgleich zwischen den Messsignalen der Sensoren eine Kompensation von Komponenten Toleranzen durchzuführen. Dies führt jedoch zu ungenauen Messwerten. Ein Nachführen des Kontrastwertes ist bei diesen Systemen nicht vorgesehen. Die Erfindung stellt sich somit die Aufgabe diese Ungenauigkeiten zu beseitigen und eine exakte Nachführung zu gewährleisten. Dies wird einerseits dadurch erreicht in dem die Sensoren über einer Eichfläche abgeglichen werden und die Abgleichwerte zur Steuerung der Sensoren in einer Abgleichtabelle (31) abgelegt werden. Andererseits wird vorgeschlagen den Abgleichvorgang am Einsatzort durchzuführen und eine adaptive Nachführung der dabei erstellten Abgleichtabelle (33) vorzusehen.

Fig.1

## Leitsensor für ein automatisch gelenktes Fahrzeug

Die Erfindung bezieht sich auf ein Verfahren zum Abgleichen einer optischen Sensorreihe nach dem Oberbegriff des Patentanspruches 1.

Zum Führen eines selbstfahrenden Fahrzeuges hat sich die Verwendung von optischen Sensoren, welche einen auf dem Boden angebrachten optischen Leitstreifen abtasten, als sehr vorteilhaft erwiesen. Insbesondere deshalb, weil die Anbringung eines Leitstreifens auf dem Boden problemlos durchzuführen ist und keine Nachbearbeitung des Bodens, wie z.B. beim Verlegen eines metallischen Leitdrahtes notwendig ist. Somit kann eine derartige Anlage auch ohne Problem in schon bereits bestehende und mit Fahrwegen ausgestattete Gebäude installiert werden.

Aus der US-PS 4 703 240 ist eine solche Abtasteinrichtung zu entnehmen, wobei eine Reihe von optischen Sensoren eine auf dem Boden angebrachte Leitspur abtasten. Die dabei erhaltenen Signale werden anhand eines Schwellwertes gewichtet und dabei die Lage des Leitstreifens auf der Grundlage der Verteilung der Signale, über die Sensorbreite gesehen, festgestellt. Befindet sich der Leitstreifen aussermittig, so wird ein Lenkmechanismus angesteuert. Zur Kompensation unterschiedlicher Toleranzen der einzelnen Sensoren wird hierbei vorgeschlagen, die ermittelten Messwerte benachbarter oder mehrerer Sensoren miteinander zu vergleichen, um damit eine geglättete Messwertkurve zu erhalten. Dadurch können zwar teilweise Toleranzen ausgeglichen werden, andererseits führt dieser Glättungsvorgang insbesondere im Bereich zwischen der Schnittstelle Boden/Leitstreifen zu Ungenauigkeiten und somit zu Abweichungen in der Spurhaltung.

Eine weitere optische Sensoreinrichtung ist aus der US-PS 4 775 023 bekannt, wobei über die Sensorreihe gesehen - abwechselnd jeder zweite Sensor angesteuert bzw. beaufschlagt wird, sodass sich die ausgesendeten Lichtkegel nicht schneiden und gegenseitig stören können. Die Auswertung der Signale orientiert sich ebenfalls an einem vorgegebenen Schwellwert und führt zu einem dem Signal entsprechenden Binärwert 0 oder 1. Diese Binärwerte werden zur Mitte hin gewichtet und bewirken ein entsprechendes Steuersignal für eine Lenkeinrichtung. Ein Abgleich der Sensoren untereinander ist nicht vorgesehen, wodurch Fehlsignale durch stark abtrifftende Sensoren möglich sind.

In der Praxis hat sich jedoch gezeigt, dass die Einhaltung einer exakten Fahrspur, insbesondere an den Abgabe- und Aufnahmestellen für die Fahrzeuge notwendig ist und die Spurhaltung über dem Leitstreifen gewährleistet sein muss.

Es ist deshalb notwendig, dass die von den Sensoren erzeugten Messsignale allein abhängig von der Abtastung bzw. der Lage des Leitstreifens sind und weitere Einflüsse, wie z.B. Komponententoleranzen der Sensoren, nicht in die Messsignale miteinfliessen.

Eine Nachregulierung des optischen Abtastsystems bei Verschlechterung der Reflektion von Boden und Leitstreifen ist beim genannten Stand der Technik nicht vorgesehen.

Dies ist jedoch notwendig, insbesondere bei längerem unbeaufsichtigtem Betrieb.

Der Erfindung stellt sich somit die Aufgabe die genannten Nachteile des bekannten Standes der Technik zu vermeiden und die optische Führungseinrichtung zu verbessern.

Diese Aufgabe wird dadurch gelöst, dass sämtliche Sensoren vor in Betriebnahme auf eine sogenannte "Urfläche" abgeglichen werden, wobei die Abgleichwerte in einer Abgleichtabelle abgelegt werden.

Unter einer Urfläche ist dabei eine über die Abgleichfläche gesehene gleichfarbige und mit einer einheitlichen Rauhtiefe versehene Fläche zu verstehen. Dadurch hat jeder Sensor beim Abgleich die gleichen Reflektionsverhältnisse.

Die Abgleichwerte können in jeweils einen entsprechend eingestellten Potentionmeter oder in einem PROM einer Rechnereinheit abgespeichert werden. Da dieser erste Abgleich in der Regel am Fertigungsort erfolgt, können Sensoren, welche sich nicht auf einen vorgegebenen Wert einstellen lassen gegen andere ausgetauscht werden.

Bei diesem ersten Abgleich werden die Sensoren im wesentlichen auf Helligkeit abgeglichen, d.h. beim Aussenden keines bestimmten Lichtimpulses muss ein bestimmter Messwert, bzw. Reflektionswert erzielt werden. Gleichzeitig kann bei diesem ersten Abgleich auch die Steilheit der Messwertkurve der einzelnen Sensoren eingestellt werden. Dies ist insbesondere durch die Verstellung, bzw. Ansteuerung der Verstärkerstufen der einzelnen Sensoren zu erreichen. Die Steilheit dieser Kurve ist ein Mass für den Kontrast.

Zum Ausregeln der Steilheit dieser Kurve ist es von Vorteil, wenn auf mehr als ein Messwert abgeglichen wird.

Die Streuung einzelner Sensoren beträgt zum Teil bis zu 50%, wodurch ein Abgleich zwischen den einzelnen Sensoren unbedingt erforderlich ist.

Der Abgleichvorgang wird automatisch durch ein Rechenprogramm eines Rechners durchgeführt.

Da am Einsatzort bezüglich Bodenbeschaffung teilweise völlig andere Verhältnisse bezüglich Reflektionsvermögen als beim Abgleich auf einer Urfläche vorherrschen, wird weiterhin vorgeschlagen, die Sensoren direkt auf der Bodenfläche des Einsatzortes nochmals auf Helligkeit abzugleichen. Aufgrund bestehender Bodenunebenheiten wird auch vorgeschlagen den Abgleich dynamisch durchzuführen, d.h. die Sensorreihe wird über eine kurze Wegstrecke während des Abgleichs verschoben und die dabei erhaltenen Abgleichwerte vermittelt und in eine feste oder temporäre Abgleichtabelle abgelegt.

Zur exakten Erfassung des Uebergangs von Bodenfläche zum Leitstreifen wird die gesamte Sensorreihe auf einen Kontrastwert X abgestimmt. Dieser Wert X wird gebildet aus dem Durchschnittswert der Messwerte der Sensoren abzüglich dem Minimalwert eines Sensors, d.h. der Minimalwert wird von den Sensoren abgegeben, welche sich über dem Leitstreifen befinden.

Die dabei ermittelten Abgleichwerte werden in einer weiteren Abgleichtabelle abgelegt oder die temporär beim Abgleich über der Bodenfläche angelegte Abgleichtabelle wird korrigiert.

Zur Kompensation einer Verschlechterung des Leitstreifens oder des Bodenbelages z.B. durch Abnutzung und Verschmutzung, ist es vorteilhaft, den Abgleichvorgang, insbesondere auf Kontrast, fortwährend während der Fahrt durchzuführen.

Dadurch wird einerseits eine sichere Führung gewährleistet und ein frühzeitiges Abstürzen bzw. ein notwendiger Stillstand der Führungseinrichtung verhindert.

Um dem System bzw. einer Bedienungsperson frühzeitig eine Warnung über eine Verschlechterung der Leitspur zu geben, ist es vorteilhaft, die Veränderungen in der Abgleichtabelle zu speichern und auszuwerten sowie an eine zentrale Anzeige zu übermitteln.

Wenn ein bestimmter Grenzwert erreicht ist, können verschiedene Stufen von Warnfunktionen ausgelöst werden. Verknüpft man die Uebermittlung der Aenderungen mit dem momentanen Fahrweg, so ist es möglich, der Bedienungsperson z.B. auf einer optischen Anzeige genau die Stelle aufzuzeigen, an welcher eine grosse Verschlechterung der Leitspur Massnahmen zur Beseitung einleiten kann.

Es ist auch möglich, eine Veränderung der Signalstärke bzw. -grösse durch Aenderung der Rechenregel für die Auswerteelektronik einer nachgeschalteten Rechnereinheit auszugleichen.

Bei den zuvor angesprochenen Abgleichungen der Sensoren werden auch, und dies insbesondere beim Erstabgleich, auch die mit den Sensoren verbundenen Elemente mit abgeglichen.

Weitere Vorteile sind anhand der Beschreibung eines nachfolgenden Ausführungsbeispieles zu entnehmen:

Es zeigen:

Fig. 1 eine Draufsicht auf ein selbstfahrendes Fahrzeug mit der optischen Leitlinienabtastung,

Fig. 2 eine vergrösserte Seitenansicht der Leitlinien-Abtastvorrichtung nach Fig. 1,

Fig. 3 ein schematisches Blockschaltbild zu der Leitlinienerfassungs-Vorrichtung nach Fig. 2,

Fig. 4 ein weiteres schematisches Blockschaltbild nach Fig. 2,

Fig. 5 die Darstellung eine Messwertreihe über die Sensorbreite

Fig. 6 die Darstellung einer Abgleichkurve der Sensoren.

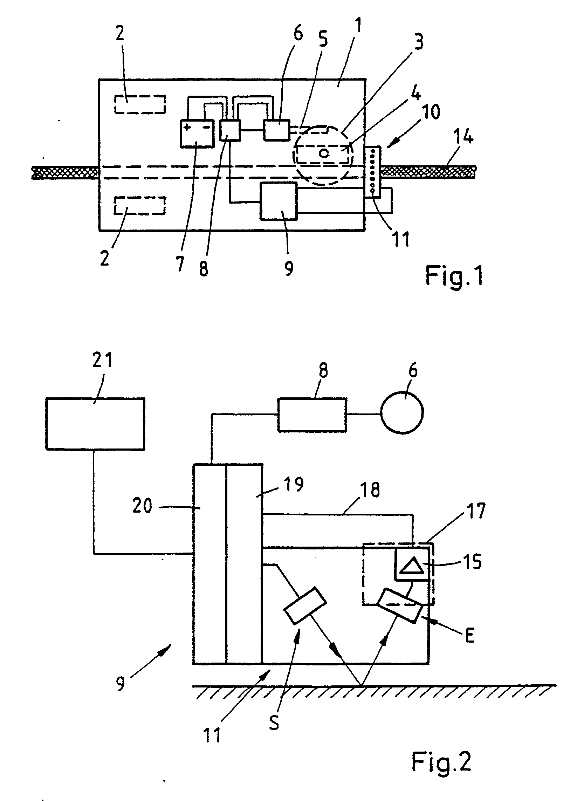

Fig. 1 zeigt ein Fahrzeug 1, welches mit zwei nicht lenkbaren Rädern 2 und mit einem über ein Drehkranz 3 verschwenkbares Lenkrad 4 versehen ist. Der Drehkranz 3 ist mit einem nicht näher aufgezeigten Zahnkranz versehen, in welchen eine Schneckenwelle 5 eines Lenkmotors 6 eingreift. Der Lenkmotor 6 erhält seine Energie von einer Batterie 7 und wird über einen Regler 8 angesteuert.

Der Regler 8 erhält seine Regelimpulse durch einen Rechner 9, der mit einem optischen Tastorgan 10 verbunden ist. Das Tastorgan 10 besteht, wie aus Fig. 2 zu ersehen, aus Sensoren 11, welche jeweils aus einem Senders S und einem Empfänger E gebildet sind.

Die Sensoren 11 tasten einen auf dem Boden angebrachten optischen Leitstreifen 14 ab.

Im gezeigten Beispiel sind quer zum Leitstreifen 14 acht Sensoren 11 in Reihe nebeneinander angeordnet.

Der Fahrantrieb erfolgt über einen nicht näher aufgezeigten Antriebsmotor kann über die Räder 2 oder über das Lenkrad 4 erfolgen.

Fig. 2 zeigt eine schematische Anbringung der Sender S und der Empfänger E, wobei jedem Empfänger E ein Verstärker 15 zum Verstärken der ankommenden Signale nachgeschaltet ist. Die Sensoren 11 sind in einem Gehäuse untergebracht, das zum Boden hin offen ist. Zur Abschirmung von Störeinflüssen, insbesondere von der Senderseite her, sind die Verstärkerstufen 15 mit einer zusätzlichen Abschirmung 17 versehen. Die verstärkten Signale werden über die Leitung 18 an eine Auswertestufe 19 ermittelten und umgeformten Signale werden an eine Rechnereinheit 20 überführt, welche die Signale auswertet und entsprechend der Auswertung ein Ausgangssignal für die Ansteuerung eines Reglers 8 erzeugt.

Dem Rechner 9 ist ein Rechner 21, ein sogenannter Host, übergeordnet. Ueber diesen Host 21 erhält der Rechner 9 Instruktionen, die sich anhand eines vorgegebenen Fahrauftrages orientieren. Dies ist insbesondere für die Auswertestufe 19 wichtig, wobei im Bereich von Weichen und Kreuzungen eine andere Auswertung der ermittelten Messwerte notwendig ist, d.h. es wird eine andere Rechenregel benutzt. Ebenso werden dem Host 21 bestimmte Auswerteergebnisse, insbesondere der Betriebszustand der Sensoren sowie der Zustand der Leitspur übermittelt, wodurch der Host entsprechend auf den von ihm gesteuerten Fahrantrieb eingreifen kann. Ausserdem kann beim Host eine optische Anzeigeeinrichtung 0 für eine Bedienungsperson vorgesehen sein.

Die Sensoren 11, die Auswertestufe 19 und die Rechnereinheit 20 sind über nicht näher aufgezeigte Steckverbindungen miteinander direkt verbindbar, was zu einer kompakten und einfachen Bauweise führt.

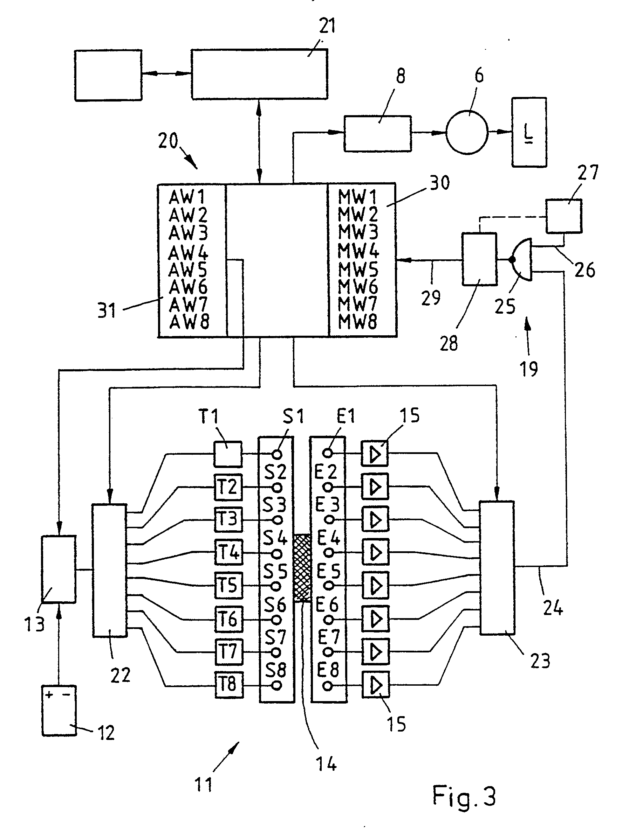

Anhand des schematischen Blockschaltbildes nach Fig. 3 wird nun das Verfahren zum Abtasten des optischen Leitstreifens 14 näher erläutert.

Bevor mit der eigentlichen Abtastung des Leitstreifens 14 begonnen werden kann, werden die Sensoren 11, bzw. die Sender S1 und S8 und Empfänger E1 bis E8, auf einen vorgegebenen Wert aufeinander über einer Urfläche abgeglichen. Der Abgleich geschieht folgendermassen:

Die von einer Energiequelle 12 (Fig. 3) abgegebene konstante Spannung wird an einem Wandler, z.B. an einem Digital-Analog-Convertor 13 angelegt, welcher durch die Rechnereinheit 20 beeinflussbar ist und entsprechend der Beeinflussung eine Ableichspannung an einen nachfolgenden Transmit-Multiplexer 22 abgibt. Der Transmit-Multiplexer 22, welcher ebenfalls von der Rechnereinheit 20 gesteuert ist, hat die Aufgabe, die vom Spannungswandler 13 abgegebene Abgleichspannung, entsprechend einer Schaltvorgabe an eine der Stromtreiberstufen T1 bis T8 der Sensoren 11 abzugeben. Die Stromtreiberstufen T1 bis T8 werden über den Multiplexer 22 nacheinander in Folge beaufschlagt.

Wird z.B. eine Abgleichspannung an die Stromtreibestufe T1 angelegt, so wird der durch diese Stromtreiberstufe T1 initialisierte Lichtimpuls über den Sender S1 in Richtung auf eine Reflektionsfläche abgegeben. Der reflektierte Lichtimpuls wird vom Empfänger E1 aufgenommen, in eine elektrische Grösse umgeformt, und über den zugeordneten Verstärker 15 verstärkt.

Die so verstärkte Meldung bzw. der Melde-Impuls, wird an einem Reiceive-Multiplexer 23 weitergeleitet. Dieser Receive-Multiplexer 23 besitzt die umgekehrte Funktion wie der Transmit-Multiplexer 22. Die über die Recheneinheit 20 gesteuerte Durchschaltung von dem Anschluss des Empfängers E1 zum Ausgangspfad 24, ermöglicht die Weiterleitung des Signals in Form von Melde-Impulsen an eine Auswertestufe 19. Die Auswertestufe 19 besteht aus einem NAND-Glied 25, an dessen Eingang einerseits der Pfad 24 und andererseits der Pfad 26 eines Impulserzeugers 27 anliegt. Der Impulserzeuger 27 sendet eine kontinuierliche Impulsfolge von z.B. 4 MHz aus. Die während einer Impulsweite des vom Impulserzeuger 27 abgegebenen Impulses von dem Pfad 24 über das NAND-Glied durchtretenden Impulse werden von einer Pulsweiten-Messung 28 gezählt, umgeformt und als digitales Signal über die Leitung 29 an eine Messwerttabelle 30 der Rechnereinheit 20 abgegeben. Dieser Vorgang wird für jeden der acht Sensoren nacheinander durchgeführt.

Der Spannungswandler 13 stellt sich für jeden einzelnen Sensor 11 nach, bis sämtliche Messwerte MW1 bis MW8 der Messwerttabelle 30 den gleichen vorgegebenen Wert aufweisen. Voraussetzung für die Abgleichung ist, dass die Sensoren beim Abgleichvorgang auf eine in der gesamten Sensorenbreite gleichmässige Reflektionsfläche ausgerichtet sind. Die über den Spannungswandler vorgenommenen Abgleichwerte pro Sensor werden in einer sog. Abgleichtabelle 31 mit den Werten AW1 bis AW8 abgelegt.

Der Abgleichvorgang erfolgt in sehr kurzer Zeiteinheit, da die Sensoren bis zu 10'000 Lichtblitze pro Sekunde nacheinander aussenden und empfangen.

Da die Festlegung der Ausgleichswerte AW1 bis AW8 über die gleichen Elemente erfolgt, wie auch die Auswertung der Messwerte während des Führens entlang einer Leitlinie, sind sämtliche Toleranzen der Bauteile bzw. des gesamten Systems mit den Abgleichwerten ausgeglichen.

Dieser erste Abgleichvorgang wird nur einmal bei Inbetriebnahme der Sensoren vorgenommen oder später nur noch bei allfälliger Reparaturen oder Komponententausch.

Durch den automatischen Abgleichvorgang werden insbesondere die Komponenten-Toleranzen der einzelnen Reflextaster erfasst und kompensiert. Die fabrikationsbedingten Toleranzen bezüglich unterschiedlicher Strahlstärken der Sendedioden S1 bis S8 und unterschiedlichen Empfindlichkeiten der Empfangselemente E1 bis E8 sind zum Teil sehr gross und können durch den automatischen Abgleichvorgang einfach und problemlos kompensiert werden.

Im Anschluss an diesen ersten Abgleichvorgang wird der gleiche Abgleich über dem Boden des Einsatzortes vorgenommen, um insbesondere die Sensoren an die andere Reflektionsfähigkeit dieses Bodens anzupassen, d.h. die Sensorreihe wird auf "Helligkeit" abgeglichen. Da dieser Boden am Einsatzort in der Regel nicht gleichmässig eben ist, empfiehlt es sich, einen dynamischen Abgleich vorzunehmen.

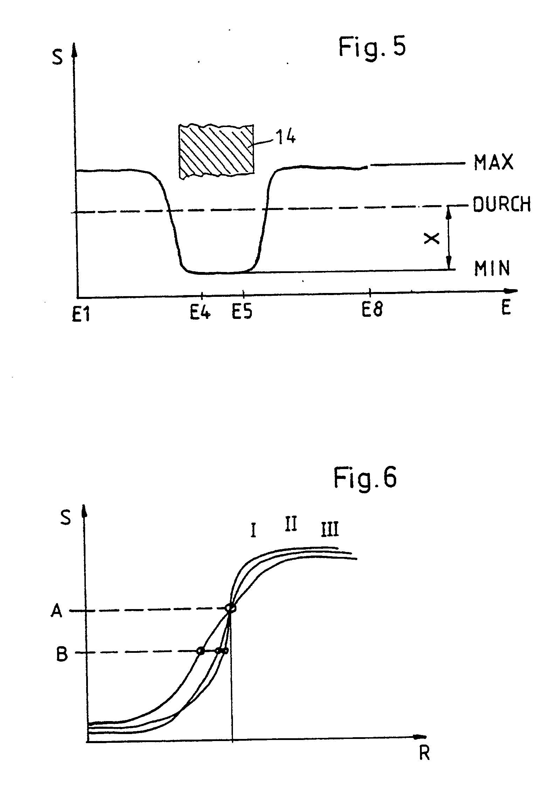

Wie insbesondere aus Fig. 6 zu entnehmen, kann bei einer geringeren Reflektion der vorher abgeglichene Wert bei A sich zu B verschieben, wobei sich dort die einzelnen Kurven I - III, welche nur als representative Auswahl von den acht Sensoren ausgewählt wurden, nicht mehr decken.

Man muss also durch Veränderung der Lichtintensität beim Sender oder durch Verschieben der Kurven durch Veränderung des Verstärkungsgrades der beim jeweiligen Empfänger erhaltenen Signale, diese Kurven wieder zu einem Schnittpunkt zusammenzuführen, um für sämtliche Sensoren eine einheitliche Ausgangsbasis zu erhalten.

Der auf der Abszisse aufgeführte Wert R könnte z.B. ein Mass für die Stromspannung sein, mit welcher die Sendediode des Senders beaufschlagt wird. Mit S wird in dieser Darstellung das Sendesignal bezeichnet.

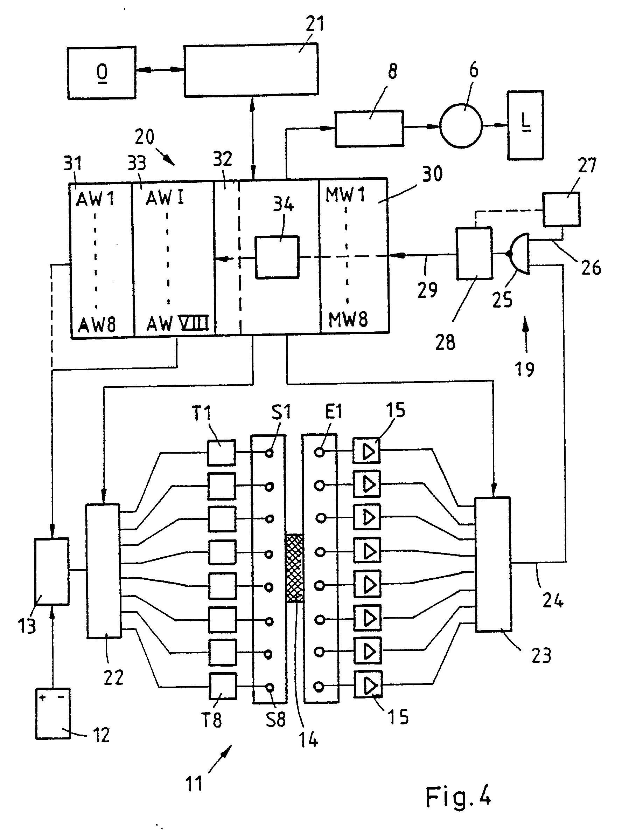

Die bei diesem Abgleichvorgang ermittelten Werte werden in einer Abgleichtabelle 32, welche in Fig. 4 schematisch angedeutet ist, gespeichert.

Fig. 6 zeigt ein Kurvenverlauf über die Breite der Sensorreihe.

Bevor mit dem Einsatz des Fahrzeuges begonnen wird, ist noch ein weiterer Abgleichvorgang insbesondere auf den "Kontrast" notwendig. Dieser Kontrast X ist wie aus Fig. 6 zu ersehen, ein Mass vom minimalen Messwert "MIN" zum Durchschnittswert "Durch" der sich aus dem Durchschnitt sämtlicher Messwerte MW1 - MW8 ergibt.

Damit der Leitstreifen 14 überhaupt erkannt werden kann, ist ein minimaler Wert X einzuhalten.

Die Sensoren 11 werden über die gesamte Sensorreihe durch gleichmässiges Nachregulieren auf der Grundlage der Abgleichtabelle 32 auf ein vorbestimmten Wert X abgeglichen und aufgrund dieses Abgleichs eine neue Abgleichtabelle 33 (Fig. 4) erstellt, welche temporär angelegt ist und während des Fahrbetriebes den Leitspurverhältnissen angepasst wird. Die Ausführung nach Fig. 4 deckt sich im wesentlichen mit der Ausführung nach Fig. 3, lediglich der weitere Abgleichvorgang und die weiteren Abgleichtabellen 32,33 einschliesslich des Dämpfungsgliedes 34 sind in dieser Darstellung zusätzlich aufgenommen. Unterschiede bestehen auch darin, dass der Transmit-Multiplexer 22 direkt über die temporäre Abgleichtabelle 33 angesteuert werden.

Um kurzzeitige Störungen durch Schmutzflecken oder dergleichen auszufiltern ist es denkbar, zwischen dem Pfad zur Abgleichtabelle 33 ein Dämpfungsglied 34, z.B. ein Tiefbassfilter vorzusehen.

Die Steuerung des Fahrzeuges entlang der Leitlinie geschieht wie folgt:

Wie beim Abgleichvorgang vorher beschrieben, werden die Stromtreiberstufen T1 bis T8 in Folge über den Transmit-Multiplexer 22 mit einer entsprechend den Abgleichwerten AWI bis AWVII erzeugten Spannung durch den Digital-Analog-Wandler 13 beaufschlagt. Die wie beim Abgleichvorgang über die Empfänger E1 bis E8, die Verstärker 15 und den Receive-Multiplexer weitergeleiteten Impulse gelangen über den Ausgangspfad 24 zu der Auswertestufe 19. Die bei der Auswertestufe 19 ermittelten Impulse gelangen in die Messwerttabelle 30. Der dabei resultierende Kontrastwert X wird zum Abgleichen an die Abgleichtabelle 33 weitergeleitet über das Dämpfungsglied 34 (Fig. 4). Im gezeigten Beispiel der Fig. 3 befindet sich der Leitstreifen 14 genau in der Mitte der Empfänger E1 bis E8. Das heisst, die Empfänger E4 und E5 empfangen keine oder nur sehr wenig Lichtreflektionen von den Sendern S4 und S5. In dem Rechner 20 wird nun die Messwerttabelle 30 ausgewertet, d.h. die Werte MW1 bis MW4 und MW5 bis MW8 werden addiert und einander summarisch gegenübergestellt. Ergibt sich dabei, dass die Summe der Messwerte MW1 bis MW4 und die Summe der Messwerte MW5 bis MW8 einander gleicht, so befindet sich das Tastorgan bzw. das Fahrzeug in optimaler Fahrstellung. Das heisst, der Rechner 20 gibt keinen Steuerimpuls an den Regler 8 ab.

Verändert sich die Fahrtrichtung, bzw. verschiebt sich die Stellung des Leitstreifens 14 im gezeigten Beispiel nach Fig. 3 zu dem Sensor S1, E1, so verändern sich die ermittelten Messwerte M1 bis M4 zu der Summe der Messwerte M5 bis M8. Infolge dieser Verhältnisveränderung der Summenbildung, gibt zum Zwecke der Rückführung auf ein ausgeglichenes Summenverhältnis der Rechner 20, entsprechend der Veränderung ein analoges Signal an einen Regler 8 ab. Dieser Regler 8 steuert einen Lenkmotor 6 an, der die Lenkung L, im gezeigten Beispiel nach Fig. 1 über eine Schneckenwelle 5 und einen Drehkranz 3, verstellt. Diese Verstellung wird so lange getätigt, bis sich die Messwertermittlung in der Summe der beiden Hälften wieder ausgleicht.

Die Rechnereinheit 20 ist durch einen übergeordneten Host 21 ansteuerbar. Dies ist insbesondere notwendig, wenn sich das Fahrzeug Kreuzungspunkten oder Weichen des Leitstreifens 14 nähert. Im Bereich der Weichen und Kreuzungen werden, wie bereits beschrieben, die ermittelten Messwerte M1 bis M8 mit einer anderen Auswerteregel ausgewertet.

Das Ausführungsbeispiel weist nur 8 Sensoren in der Breite auf. Zur Erhöhung der Abtastgenauigkeit ist es vorteilhaft, mehr als 8 Sensoren zu verwenden.

Durch diese Anwendung einer analogen Abtastung und einer digitalen Auswertung mit exakter Abgleichung der Sensoren zur Abtastung eines Leitstreifens ist das System in der Lage eine exakte Steuerung zu ermöglichen, wobei eine gewisse Unregelmässigkeit der Leitlinie, der Verschlechterung, sowie kurzzeitig auftretende Verschmutzungen auf dem Boden weitgehend kompensiert werden.

Es ist vorgesehen, dass beim Ausschalten der Steuereinrichtung bzw. des Fahrzeuges die temporären Abgleichtabellen 32, 33 gelöscht werden und beim wieder einschalten nur noch die auf die Urfläche abgeglichene Abgleichtabelle 31 aktiv ist.

Dies ergibt eine gewisse Sicherheit, insbesondere, wenn das Fahrzeug dann an einem anderen Einsatzort eingesetzt wird, wo andere Verhältnisse vorhanden sind. Dort kann dann das System mit dem entsprechenden und vorher beschriebenen Abgleich wieder angepasst werden. Die Werte der Abgleichtabelle 32 können auch als Kontrollwerte der auf Kontrast eingestellten Abgleichwerte der Abgleichtabelle 33 präsent bleiben, d.h. wenn in Folge eines stark abfallenden Kontrastes die Nachstellung der Sensorreihe zu gross wird kann durch Vergleich mit den ursprünglichen Messwerten eine Warnfunktion ausgelöst werden.

**Ansprüche**

1. Verfahren zum Abgleichen einer optischen Sensorreihe (11), welche zum Führen eines selbstfahrenden Fahrzeuges entlang eines optischen Leitstreifens (14) quer zur Fahrrichtung am Fahrzeug befestigt ist und die Abtastung bezüglich der Anzahl der Sensoren (11) in zeitlicher Verzögerung erfolgt, wobei die über eine nachgeschaltete Rechnereinheit (20) ausgewerteten Messignale (MW1-MW8,MWI-MWVIII) zur Ansteuerung eines Lenkmechanismusses dienen, dadurch gekennzeichnet, dass die Sensoren (11) auf eine unterhalb der Sensorenreihe zugestellte einheitliche und gleichmässige Eichfläche auf mindestens einen vorgegebenen Messwert abgeglichen werden und die beim Abgleichvorgang für jeden einzelnen Sensor (11) ermittelten Abgleichwerte (AW1 - AW8) in einer Abgleichtabelle (31) abgespeichert werden.

2. Verfahren nach Anspruch 1, dadurch gekennzeichnet, dass die Sensoren (11) auf die am Einsatzort befindliche Bodenfläche statisch oder dynamisch auf mindestens einen vorgegebenen Wert abgeglichen werden und die beim Abgleichvorgang ermittelten Abgleichwerte in einer festen oder temporären Abgleichtabelle (32) abgespeichert werden.

3. Verfahren nach Anspruch 2, dadurch gekennzeichnet, dass die Sensoren (11) auf die am Einsatzort befindliche Bodenfläche einschliesslich des auf der Bodenfläche befindlichen Leitstreifens (14) auf einen vorbestimmten Kontrastwert X abgeglichen werden, welcher sich aus - über die Breite der Sensorreihe gesehen -der Division des Durchschnitt-Messwertes sämtlicher Sensoren (11) und dem minimalsten Messwert MIN der Sensoren ergibt, wobei der Abgleichvorgang ausgehend von der temporären Abgleichtabelle (33) der Bodenfläche vorgenommen wird und die beim Abgleichvorgang ermittelten Werte in einer temporären Abgleichtabelle abgelegt werden.

4. Verfahren nach Anspruch 3, dadurch gekennzeichnet, dass der Abgleichvorgang auf den vorbestimmten Kontrastwert X adaptiv während der Führung über den Leitstreifen (14) vorgenommen wird.

5. Verfahren nach Anspruch 4, dadurch gekennzeichnet, dass die Veränderung des Kontrastwertes X und/oder die Veränderung der Abgleichtabelle (33) gespeichert und ausgewertet werden.

6. Verfahren nach Anspruch 5, dadurch gekennzeichnet, dass die Veränderungen in Verbindung mit der Fahrstreckenposition gespeichert und ausgewertet werden.

7. Verfahren nach Anspruch 6, dadurch gekennzeichnet, dass die gespeicherten und ausgewerteten Veränderungen an eine zentrale Anzeigeeinheit (10) übermittelt werden.

8. Verfahren nach Anspruch 5 oder 6, dadurch gekennzeichnet, dass beim Erreichen eines vorgegebenen Schwellwertes der Veränderungsgröße ein Warnsignal ausgelöst wird.

9. Verfahren nach einem der Ansprüche 5,6,7 oder 8, dadurch gekennzeichnet, dass beim Erreichen eines vorgegebenen Schwellwertes der Veränderungsgröße der Fahrantrieb verlangsamt oder stillgesetzt wird.

10. Verfahren nach einem der Ansprüche 1 bis 3, dadurch gekennzeichnet, dass die in der Abgleichtabelle (31,32,33) abgelegten Werte (AW1-AW8, AWI-AWVII) als Mass für die an die Stromtreiberstufen (T) der einzelnen Sender (S1-S8) der Sensoren (11) anzulegende Spannung herangezogen werden.

11. Verfahren nach einem der Ansprüche 1 bis 3, dadurch gekennzeichnet, dass die in der Abgleichtabelle (31,32,33) abgelegten Werte (AW1-AW8, AWI-AWVIII) als Mass für die Einstellung der den Empfängern (E1-E8) der Sensoren (11) zugeordneten Verstärkerstufen (15) herangezogen werden.

12. Verfahren nach einem der Ansprüche 1 bis 3, dadurch gekennzeichnet, dass die in der Abgleichtabelle (31,32,33) abgelegten Werte (AW1-AW8, AWI-AWVIII) als arithmetische Größe bei der Auswertung der ermittelten Messwerte (MW1-MW8) einbezogen werden.

13. Verfahren nach einem der Ansprüche 1 bis 3, dadurch gekennzeichnet, dass der Sender (S1-S8) eines Sensors (11) mindestens 5000 Infrarot-Lichtblitze pro Sekunde aussendet.

14. Verfahren nach Anspruch 13, dadurch gekennzeichnet, dass der Sender (S1-S8) eines Sensors vorzugsweise 10 000 Lichtblitze pro Sekunde aussendet.

EP 0 383 352 A1

Fig.1

Fig.2

Fig.3

Fig.4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4003445 (C. DE BRUINE) <br> * Spalte 6, Zeilen 39 - 50 * <br> * Spalte 7, Zeilen 41 - 49; Figuren 1, 3 * <br> --- | 1 | G05D1/02 <br> G01S7/48 |
| A,D | US-A-4703240 (Y. YOSHIMOTO ET AL.) <br> * Spalte 2, Zeile 22 - Spalte 3, Zeile 10 * <br> --- | 1 | |
| A | APPLIED OPTICS. <br> vol. 22, no. 23, 01 Dezember 1983, NEW YORK US <br> Seiten 3771 - 3777; M. Duggin et al.: <br> "Groud reflectance mesurement techniques:_a compararison" <br> * Seite 3772, linke Spalte, Zeile 39 - Seite 3773, linke Spalte, Zeile 4; Figur 5 * <br> --- | 1 | |
| A | EP-A-0195191 (INVENTIO AG) <br> * Seite 11, Zeilen 10 - 27 * <br> --- | 3-9 | |
| A | IBM TECHNICAL DISCLOSURE BULLETIN. <br> vol. 29, no. 9, Februar 1987, NEW YORK US <br> Seite 4189 <br> "Self-adjusting analog toner patch senor" <br> * das ganze Dokument * <br> --- | 10 | |
| A,D | US-A-4775023 (K. SHIMADA ET AL.) <br> * Spalte 2, Zeilen 19 - 58 * <br> * Spalte 3, Zeile 64 - Spalte 4, Zeile 50 * <br> * Spalte 6, Zeilen 10 - 25; Figuren 1, 2 * <br> --- | 1 | |
| A | DE-A-3715025 (DAIFUKU CO. LTD.) <br> * Spalte 6, Zeilen 14 - 21 * <br> * Spalte 16, Zeilen 8 - 15; Figur 1 * <br> ----- | | |

| RECHERCHIERTE SACHGEBIETE (Int. Cl.5 ) |
|---|
| G05D <br> H05B <br> G01B <br> G01S <br> G01N |

Der vorliegende Recherchenbericht wurde für alle Patentansprüche erstellt

| Recherchenort | Abschlußdatum der Recherche | Prüfer |
|---|---|---|
| DEN HAAG | 12 APRIL 1990 | HELOT H.V. |